# EUROPÄISCHE PATENTSCHRIFT

(11) **EP 2 092 486 B1**
(45) Veröffentlichungstag und Bekanntmachung des Hinweises auf die Patenterteilung: **30.01.2013**
(21) Anmeldenummer: 07856859.9
(22) Anmeldetag: 18.12.2007
(51) Int. Cl.: G06T 7/00

(54) **VERFAHREN ZUR BILDMARKEN-UNTERSTÜTZTEN BILDAUSWERTUNG**
METHOD FOR PICTURE MARKER SUPPORTED IMAGE EVALUATION
PROCÉDÉ POUR ÉVALUER UNE IMAGE À L'AIDE DE REPÈRES D'IMAGE

(30) Priorität: 21.12.2006 DE 102006060716
(43) Veröffentlichungstag der Anmeldung: 26.08.2009
(73) Patentinhaber: Fraunhofer-Gesellschaft zur Förderung der angewandten Forschung e.V., 80686 München (DE)
(72) Erfinder: REHFELD, Nils, 76751 Jockgrim (DE)
(74) Vertreter: Rösler, Uwe
(86) Internationale Anmeldenummer: PCT/EP2007/011136
(87) Internationale Veröffentlichungsnummer: WO 2008/077538

(56) Entgegenhaltungen:
- EP-A- 1 176 557
- DE-A1- 19 733 466
- DE-A1-102004 054 827
- US-A1- 2004 002 642
- US-A1- 2006 007 452
- US-B1- 6 771 808
- REHFELD N.: "Codierte Maker als Mess- und Interaktionskomponente für das Kindermuseum ZOOM in Wien" FRAUNHOFER IITB JAHRESBERICHT, 2001, Seiten 32-33, XP002472153
- SUNG JOON AHN ET AL: "Circular coded landmark for optical 3D-measurement and robot vision" INTELLIGENT ROBOTS AND SYSTEMS, 1999. IROS '99. PROCEEDINGS. 1999 IEEE/RSJ INTERNATIONAL CONFERENCE ON KYONGJU, SOUTH KOREA 17-21 OCT. 1999, PISCATAWAY, NJ, USA,IEEE, US, Bd. 2, 17. Oktober 1999 (1999-10-17), Seiten 1128-1133, XP010362465 ISBN: 0-7803-5184-3

## Beschreibung

### Technisches Gebiet

Die Erfindung bezieht sich auf ein Verfahren zur Bildmarken-unterstützten Bildauswertung, bei dem wenigstens ein Bild von einer Szene, in der wenigstens eine kontrastreiche Bildmarke sichtbar eingebracht ist, mittels einer Bildaufnahmeeinheit aufgenommen wird, und das aufgenommene Bild einer Bildauswertung unterzogen wird, bei der wenigstens eine Bildmarke detektiert und identifiziert und deren Position und Orientierung innerhalb des aufgenommenen Bildes ermittelt werden.

Ein derartiges zur Bildmarkenerkennung ausgelegtes Verfahren wird beispielsweise zur Analyse eines mit einer Hochgeschwindigkeitskamera aufgenommenen Crashvorganges eingesetzt, bei dem bspw. unter Vorgabe bestimmter Crashbedingungen ein Frontalzusammenstoß bei einem Kraftfahrzeug experimentell nachgestellt und untersucht wird. Hierzu werden kontrastreiche Bildmarken an exponierten Karosseriebereichen des Kraftfahrzeuges sichtbar angebracht, um anhand von sich durch die Crash-bedingte Karosseriedeformation einstellenden relativen Lageänderungen der an der Karosserie angebrachten Bildmarken zueinander Aussagen über die Stabilität sowie das Energieabsorbtionsvermögen jeweiliger Karosseriebereiche anstellen zu können.

### Stand der Technik

Für geometrische Messaufgaben insbesondere in komplexen 3-D-Szenen, wie beispielsweise die vorstehend erwähnten Crashbildszene-Auswertungen, werden vornehmlich bildgestützte Verfahren eingesetzt, da sie dem Benutzer eine unmittelbare Beurteilung von Messsituation und -ergebnis erlauben, sowie die Möglichkeit zur einfachen Interaktion bieten.

Verfahren für die Auswertung von Bildern und Bildfolgen für Messaufgaben beruhen auf der genauen Vermessung von einzelnen, sich im Bild besonders hervorhebenden bzw. interaktiv markierten Bildelementen. Hierzu werden meist auf den zu vermessenden Objekten Marker aufgebracht, die einerseits auf den realen Objekten eine eindeutige Position kennzeichnen, andererseits im aufgenommenen Bild bzw. in der aufgenommenen Bildfolge leicht und genau zu vermessen sind. Maßgeblich für die Gestaltung der Marker ist, dass sie im Bild auch dann gut erkennbar sein müssen, wenn ihr Abbild nur eine geringe Ausdehnung im Bereich weniger Bildpixel aufweist. Daher kommen für die Gestaltung der Marker nur einfache geometrische Strukturen mit hohem Kontrast in Frage, wie etwa einzelne Punkte - hell auf dunklem Grund oder dunkel auf hellem Grund - oder der Eckenausschnitt eines SchachbrettMusters wie im Falle des so genannten Quadranten-Markers.

Es können grundsätzlich zwei Arten von Markern unterschieden werden, je nachdem, ob sie vornehmlich für die automatische oder für die interaktive Vermessung eingesetzt werden:
Marker für die automatische Vermessung weisen in der Regel einzelne Punkte in wohl definierter geometrischer Anordnung auf, die mittels spezifischer Bildauswertungsverfahren im Bild sicher detektiert und deren Anordnung genau vermessen werden kann. Allerdings zeigen solche Marker Nachteile bei der interaktiven Vermessung, da ihre Muster vom Menschen vergleichsweise schlecht wahrgenommen und zueinander in Beziehung gesetzt werden können. Als Beispiel seien hier der Einpunktmarker sowie der im deutschen Automobilbau standardmäßig eingesetzte, so genannte Fünf-Punkt-Marker (MXT-Marker, Rehfeld, N: Beitrag zur automatischen Bildfolgenauswertung von Aufprallversuchen in der Automobilindustrie, FhG-IITB-Mitteitungen 1992, Karlsruhe 1992, pp. 36-40.) genannt. Für diese Marker existieren leistungsfähige automatische Bildauswertungsverfahren zur Positionsvermessung. Um die Marker im Bild unterscheiden zu können, werden diese kreisförmigen Marker aktuell mit einem äußeren Code-Ring versehen, der eine sichere automatische Identifikation jedes einzelnen Markers ermöglicht.

Vornehmlich für interaktive Messaufgaben werden im internationalen Raum die so genannten Quadranten-Marker eingesetzt, deren 2-D-Position im Bild aufgrund ihres deutlich erkennbaren Mittelpunkts als Berührpunkt der zwei hellen und zwei dunklen Quadranten durch den Benutzer leicht und genau bestimmt werden kann. Es sind jedoch keine Verfahren bekannt, die eine automatische Identifikation dieser Marker sowie die Vermessung von deren Position und Orientierung im dreidimensionalen Raum ermöglichen.

Für die automatische 2-D-Bildauswertüng wird derzeit die Möglichkeit einer Bestimmung der Drehlage der Marker verlangt. Im Falle der 3-D-Auswertung soll darüber hinaus von den Auswertungsverfahren neben der Position auch die Orientierung des Markers geliefert werden. Diese so genannte POSE-Vermessung ist nur mit ausreichend strukturierten Markern zu leisten, wonach Marker mit nur einem Punkt aufgrund ihrer zu geringen Strukturierung hierfür grundsätzlich ungeeignet sind.

Für eine automatische Bildauswertung sind in einem allgemeineren Kontext mit mehreren Markern nur Marker einsetzbar, die identifiziert werden können. Dies führt zum Einsatz von Markern mit einem Code-Ring. Diese Marker sind zwar für die automatische Bildauswertung gut geeignet, sie haben aber für Interaktionsaufgaben, etwa bei der Einrichtung eines Messaufbaus oder der visuellen Überprüfung der Messergebnisse, aufgrund ihrer schlechten Wahrnehmbarkeit deutliche Nachteile.

Für die bislang hauptsächlich für interaktive Vermessungsaufgaben eingesetzten Quadranten-Marker existieren keine automatischen Bildauswertungsverfahren, die eine robuste Detektion, eine Identifikation sowie eine genaue Vermessung im zwei- und dreidimensionalen Raum erlauben.

Der DE 197 33 466 D1 ist ein Verfahren zur Detektion, Positions- und Lagebestimmung und Identifikation einer photogrammetrischen Markierung durch rechnergestützte Bildauswertung zu entnehmen. Die Markierung besteht dabei aus zwei konzentrischen Kreisen, die von einem Codekreisring umgeben sind. Der Zentralkreis weist in seinem Zentrum ein Zielkreuz auf. Vergleichbare Markierungen sind auch den folgenden Druckschriften zu entnehmen: US 2006/0007452 A1,

EP 1 176 557 A1 sowie Fraunhofer IITB Jahresbericht 2001, "Codierte Marker als Mess- und Interaktionskomponente für das Kindermuseum ZOOM in Wien", S, 32-33.

Quadranten-Marker sind aus US 2004/0002642 und US 6771808 bekannt.

### Darstellung der Erfindung

Es besteht die Aufgabe, ein Verfahren zur Bildmarken-unterstützten Bildauswertung, bei dem wenigstens ein Bild von einer Szene, in der wenigstens eine kontrastreiche Bildmarke sichtbar eingebracht ist, mittels einer Bildaufnahmeeinheit aufgenommen wird, und das aufgenommene Bild einer Bildauswertung unterzogen wird, bei der wenigstens eine Bildmarke detektiert und identifiziert und deren Position und Orientierung innerhalb des aufgenommenen Bildes ermittelt werden, derart weiterzubilden, so dass sowohl eine automatisierte Vermessung als auch die Durchführung von interaktiven Messaufgaben möglich wird und dies unter Verwendung eines einzigen Bildmarkentyps.

Die Lösung der der Erfindung zugrunde liegenden Aufgabe ist im Anspruch 1 beschrieben. Den Erfindungsgedanken vorteilhaft weiterbildende Merkmale sind Gegenstand der Unteransprüche sowie der weiteren Beschreibung zu entnehmen. Gleichfalls sind die in den Unteransprüchen enthaltenden Merkmale Gegenstand der Beschreibung.

Lösungsgemäß zeichnet sich ein Verfahren gemäß den Merkmalen des Oberbegriffes des Anspruches 1 derart aus, dass als kontrastreiche Bildmarke ein von einer Kreislinie einbeschriebenes Kreisflächenmuster gewählt wird, dessen Kreisfläche in vier jeweils zum Kreismittelpunkt punktsymmetrisch ausgebildete Quadrantenflächen unterteilt ist, von denen jeweils zwei sich dem Kreismittelpunkt gegenüberliegende Quadranten im optischen Erscheinungsbild identisch sind und sich jeweils zwei in Kreisumfangsrichtung benachbart angeordnete Quadranten kontrastreich voneinander abheben, sowie mit einem die Kreislinie peripher umgebenden Ringbereich, der in wenigstens zwei, vorzugsweise sechs die Bildmarke individualisierende Ringsektoren unterteilt ist, von denen sich jeweils zwei in Kreisumfangsrichtung benachbart angeordnete Ringsektoren kontrastreich voneinander abheben und einen die Bildmarke individualisierenden Code repräsentieren, dass die Detektion der Bildmarke durch Auffinden des Kreismittelpunktes, dem so genannten Zentralpunkt, der Bildmarke erfolgt, in dem die vier Quadrantenflächen zusammentreffen und dass die Detektion des Zentralpunktes im Rahmen einer auf Bildpixelebene erfolgenden Ringabtastung durchgeführt wird.

Das lösungsgemäße Verfahren vereint somit die Vorteile des bekannten, in der automatischen Bildauswertung eingesetzten Fünf-Punkt-Markers mit Code-Ring und des bekannten, bei der interaktiven Bildauswertung eingesetzten Quadranten-Markers derart, dass eine neuartige Bildmarke Einsatz findet, die sich in der Grundgestaltung von dem bisher bekannten Quadranten-Marker ableitet und zusätzlich einen den kreisrunden Marker peripher umgebenden Code-Ring aufweist, der bei dem Fünf-Punkt-Marker bereits verwendet wird.

Um eine derart im Design neue Bildmarke sowohl bezüglich ihres Ortes bzw. ihrer Position innerhalb des aufgenommenen Bildes als auch insbesondere hinsichtlich ihrer Orientierung in Bezug auf den Bildaufnahmeblickwinkel, d.h. hinsichtlich Verdrehung und Verkippung, automatisch zu bestimmen, sind gemäß eines bevorzugten Bildauswerteverfahrens die nachfolgenden Verfahrensschritte auszuführen:
Zunächst gilt es, das von einer Szene, in der wenigstens eine der vorstehend beschriebenen Bildmarken sichtbar an einem Szenenobjekt angebracht ist, mit Hilfe einer Kameraeinheit aufgenommene Bild, das in digitaler Form als Bilddatensatz vorliegt, derart vor zu bearbeiten, so dass der Bilddatensatz möglichst um kontrastarme Bildinhalten reduziert wird und vorwiegend kontrastreiche Bildinformationen für eine weiterführende Bildauswertung zugrunde gelegt werden können. Zur Hervorhebung derartiger kontrastreicher, d.h. hochfrequenter Bildinhalte, wird eine Hochpassfilterung mittels an sich bekannter Fouriertechnik durchgeführt, um ein so genanntes differenziertes Bild zu erhalten, das der weiteren Bildauswertung zugrunde gelegt wird, bei der es in groben Zügen darum geht, zunächst die neuartigen Bildmarken in größeren, nicht besonders markierten Bildbereichen automatisch zu detektieren, nachfolgend die perspektivische Verzerrung der Bildmarke im Bild zu bestimmen und anschließend unter Berücksichtigung der Affintransformation der Bildmarker anhand ihres Code-Ringes zu identifizieren. Abschließend kann bei bekannten Abbildungsparametern der Aufnahmekamera die räumliche Position und Orientierung der Bildmarke bestimmt werden.

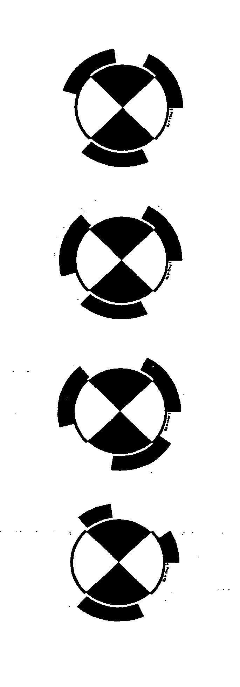

Das Verfahren soll anhand eines konkreten Ausführungsbeispiels unter Bezugnahme näher erläutert werden:
Die zu vermessenden Objekte und/oder Szenenpunkte werden mit den neuartigen Quadranten-Bildmarkern mit Code-Ring bestückt. Beispiele für solche Quadranten-Bildmarker mit Code-Ring sind in der einzigen Figur in vier unterschiedlichen Darstellungsformen gezeigt. Jede einzelne Bildmarke weist eine Kreisfläche mit vier punktsymmetrischen Quadrantenfeldern auf, von denen jeweils zwei in Umfangsrichtung unmittelbar benachbarte Quadrantenfelder einen möglichst großen Kontrast aufweisen, bspw. schwarz/weiß. Der Kreismittelpunkt wird als Zentralpunkt bezeichnet und ist dadurch charakterisiert, dass an ihm vier Bildbereiche angrenzen, von denen sich zwei mit größtmöglichen Kontrast von den beiden anderen abheben und umgekehrt. Die Kreisfläche wird von einer Kreislinie umgeben, die ihrerseits peripher von einem Ringbereich umfasst ist, der in sechs Ringsektoren unterteilt ist. Jeweils in Umfangsrichtung unmittelbar benachbarte Ringsektoren weisen zueinander gleichfalls wie die Quadrantenfelder einen größtmöglichen Kontrast auf. Die in Umfangsrichtung gemessene Sektorlänge sowie die Anordnung der Ringsektoren definieren eine Codeinformation, die zur Identifikation der einzelnen Bildmarken dient sowie zur Festlegung deren Drehlage im aufgenommenen Bild. Die Größe der Bildmarken wird an die Größe der jeweils zu vermessenden Objekte angepasst.

Das Bildaufnahme- bzw. Kamerasystem ist derart auszuwählen, dass die Bildmarken jeweils mit einem Durchmesser von mindestens acht Bildpixeln erfasst werden.

Die Detektion der Bildmarken erfolgt durch die Detektion jeweils ihres Zentralpunktes, wobei das aufgenommene Bild in ein differenziertes Bild transformiert wird, in dem bevorzugt höherfrequente Bildsignalanteil, d.h. kontrastreiche Bildinhalte enthalten sind. Zur Detektion der Zentralpunkte werden hierbei kleine kreisförmige Bildbereiche mit einem Durchmesser von etwa 4 Bildpixeln betrachtet. Es werden solche Bildbereiche als Detektionen zugelassen, deren durch Ringabtastung erhaltene Signale nach Mittelwertbefreiung zwei Bereiche mit positiver und zwei Bereiche mit negativer Amplitude aufweisen. Die Analyse erfolgt hier über eine Lauflängencodierung der Ringabtastung.

Die auf diese Weise erhaltenen Einzeldetektionen kennzeichnen Kandidaten für Bildmarken-Zentralpunkte im Pixelraster des differenzierten Bildes. Im nächsten Schritt werden alle unmittelbar benachbarten Einzeldetektionen zu so genannten Detektionsballungen zusammengefasst, wobei nur solche Detektionsballungen zugelassen werden, deren Anzahl an Einzeldetektionen in einem zulässigen Bereich liegen. Als Ergebnis dieser Verarbeitungsstufe wird eine Liste möglicher Kandidaten für Bildmarken-Zentren erhalten.

Zur Positionsbestimmung der Bildmarken werden die Orte ihrer Zentralpunkte genau bestimmt. Für die initiale Schätzung der Marker-Zentralpunkte wird hierbei der Schwerpunkt der Detektionsballung ermittelt. Die Bildmarken-Zentralpunkte zeichnen sich im Bild insbesondere dadurch aus, dass die Struktur ihrer unmittelbaren Umgebung unabhängig von der Aufahmeperspektive punktsymmetrisch ist. Unter dieser Annahme wird in einem Optimierungsprozess für jede Detektionsballung derjenige Punkt mit der ausgeprägtesten Punktsymmetrie seiner Umgebung im Bildkoordinatensystem subpixelgenau gesucht, wobei eine oder mehrere Ringabtastungen um den jeweiligen Zentralpunkt durchgeführt werden. Zur Analyse der aus den Ringabtastungen erhaltenen Signale wird nachfolgend deren Autokorrelationsfunktion berechnet. Die Güte der Punktsymmetrie zeigt sich in der Autokorrelationsfunktion insbesondere an der Stelle 180 Grad. Im Falle einer perfekten Symmetrie weist die Autokorrelationsfunktion hier einen Wert nahe 1 auf.

Liefert der Optimierungsprozess eine Position für den Bildmarken-Zentralpunkt, die außerhalb eines vorgebbaren Erwartungsintervalls liegt, so wird dieser Zentralpunkt verworfen. Die Länge des Erwartungsintervalls wird hierbei aus dem Radius der in der Detektionsstufe durchgeführten Ringabtastung abgeleitet.

Nach erfolgter Positionsbestimmung des jeweiligen Bildmarken-Zentralpunktes in Bezug zu einem durch das Bild bestimmten Koordinatensystem erfolgt die Identifizierung einer lokalen Affintransformation der neuartigen Quadranten-Bildmarke. Im Allgemeinen erscheint die Bildmarke im Bild, bedingt durch Verkippung und Drehung, in perspektivischer Verzerrung relativ zu einer durch das Bildaufnahmesystem vorgegebenen Bildebene. Für die hier betrachteten kleinen. Bildbereiche kann diese Abbildung in guter Näherung als affine Abbildung mit Drehung und Scherung angenommen werden. Zur Bestimmung der Parameter der affinen Abbildung werden eine oder mehrere Ringabtastungen um den Bildmarken-Zentralpunkt herangezogen und die Ringabtastungen entsprechend der Affintransformation verzerrt. Die Auswertung der aus der Ringabtastung erhaltenen Signale erfolgt über deren Autokorrelationsfunktion und hieraus abgeleitete Symmetriekennwerte.

In einem Optimierungsprozess wird die Ringabtastung auf eine 90-Grad-Symmetrie hin optimiert. Für eine Abtastung mit kompensierter Scherung zeigen sich bei der Quadranten-Bildmarke in der Autokorrelationsfunktion an den Stellen 90 und 270 Grad Werte nahe dem Wert -1.

Die Bestimmung des Drehwinkels erfolgt anhand der Fouriertransformierten des optimierten Ringabtastungssignals. Die Drehlage ist durch die Phase der zweiten Ordnung des Spektrums bestimmt. Dabei ergibt sich der Drehwinkel hier zunächst nur bis auf eine Mehrdeutigkeit von 180 Grad. Die eindeutige Bestimmung erfolgt erst im übernächsten Verarbeitungsschritt.

Die Skalierung der affinen Abbildung wird durch die Bestimmung der Länge der Hauptachsen der Bildmarken ermittelt. Als Hauptachsen werden die Hell-Dunkel-Kanten der Quadranten innerhalb des Code-Rings unter Berücksichtigung der ermittelten Scherung herangezogen.

Liegen für einen Bildmarken-Kandidaten die auf diese Weise gewonnenen Parameter der Affintransformation außerhalb eines bestimmten Erwartungsintervalls, so wird dieser Bildmarke-Kandidat zurückgewiesen.

Im nächsten Schritt erfolgt die Identifikation jeder einzelnen detektierten Bildmarke durch eine Identifikation des Code-Rings, der unter Berücksichtigung der bisher bekannten Drehlage gelesen wird.

Der Identifizierungscode der Bildmarke erstreckt sich, wie bereist erwähnt, ringförmig um die Kreisfläche der Bildmarke. Als Binärcode wird ein 1-D-Code, in Form eines Strichcodes mit konstanter Codewortlänge und ungerader Anzahl von Modulen verwendet, vorzugsweise der so genannte Code128. Eine Ringabtastung mit einem relativ zum Zentralpunkt der Bildmarke festgelegten Radius liefert eine lineare zyklische Codeabtastung, wobei die Lage des Code-Rings der Quadranten-Bildmarke mit der bisher ermittelten Affintransformation bis auf die Doppeldeutigkeit bezüglich der Drehlage bestimmbar ist. Durch Lesen des Codes und Identifikation des Codeworts wird jedoch diese Doppeldeutigkeit in folgender Weise behoben. Entsprechend der bestehenden Doppeldeutigkeit der Drehlage existieren zwei Startpunkte für das Lesen des Codes in der Ringabtastung und damit zwei mögliche Codeworte. Aufgrund der Eindeutigkeit des verwendeten Codes ist von diesen zwei Codewörtern nur eines gültig. Mit der Ermittlung des gültigen Codewortes ist die Drehlage des Codes auf dem Code-Ring eindeutig und die lokale Affintransformation damit vollständig bestimmt.

So führen Codeabtastungen mit ungültigem Code zum Ausschluss des jeweiligen Bildmarken-Kandidaten. Als Ergebnis dieser Verarbeitungsstufe liegt eine Liste von identifizierten und vermessenen Quadranten-Bildmarken im Bildbereich vor. Deren räumliche Position und Orientierung bezogen auf die Szene ist jedoch noch unbekannt.

Ist hingegen für das Aufnahmesystem die innere Orientierung bekannt (photogrammetrische Kalibrierung), so können die Position und die Orientierung der Quadranten-Bildmarke im Raum eindeutig bestimmt werden. Voraussetzung hierfür ist die Bekanntheit der tatsächlichen Größe des Quadranten-Bildmarke sowie ihres Höhenprofils in Form einer Liste von Koordinaten ausgezeichneter Bildmarkenpunkte in einem Bildmarken-bezogenen 3-D-Koordinatensystem. Da jeder Punkt auf der Bildmarke in der Bildfunktion eindeutig einem Punkt auf der realen Marke zugeordnet werden kann, ist die Position und Orientierung der Bildmarke im Kamerakoordinatensystem im Rückwärtsschnittverfahren bestimmbar.

Die Quadranten-Bildmarke enthält gemäß den in der einzigen Figur dargestellten Ausführungsbeispiele fünf ausgezeichnete Punkte: den Zentralpunkt und die vier Außeneckpunkte der einzelnen Quadranten. Alle diese Punkte werden direkt aus der Bildfunktion in ihrer 2-D-Position bestimmt. Für die Berechnung der 3-D-Markenposition und 3-D-Orientierung im Rückwärtsschnittverfahren werden diese Messwerte verwendet. Auf diese Weise wird sichergestellt, dass mögliche perspektivische Verzerrungen, die in einer Affintransformation keine Berücksichtigung finden, bei der 3-D Auswertung berücksichtigt werden. Die Zuordnung der Markenpunkte im Bildmarken-bezogenen Koordinatensystem zu den ausgezeichneten Markenpunkten im Bild erfolgt über die vorher bestimmte lokale Affintransformation.

Typischerweise wird eine Bildmarke von einem Bildaufnahmesystem unter einem sehr kleinen Aspektwinkel erfasst. Die perspektivische Abbildung der Bildmarke kann daher häufig in guter Näherung als Parallelprojektion angenommen werden. Dies führt zum einen zu einer geringen Genauigkeit der Entfernungsmessung und zum anderen zu einer Doppeldeutigkeit der 3-D-Orientierung. Werden dagegen mehrere Bildmarken auf einem starren Körper angebracht, bilden diese zusammen eine größere räumliche Struktur, die in einem objektbezogenen Koordinatensystem vermessen werden kann. Über die Identifizierung und Vermessung der einzelnen Bildmarken im aufgenommenen Szenebild wird für das Gesamtobjekt somit ein größerer Aspektwinkel erreicht. Damit liefert das Rückwärtsschnittverfahren eine höhere Genauigkeit und Robustheit für das Messverfahren.

## Patentansprüche

1. Verfahren zur Bildmarken-unterstützten Bildauswertung, bei dem wenigstens ein Bild von einer Szene, in der wenigstens eine kontrastreiche Bildmarke sichtbar eingebracht ist, mittels einer Bildaufnahmeeinheit aufgenommen wird, und das aufgenommene Bild einer Bildauswertung unterzogen wird, bei der wenigstens eine Bildmarke detektiert und identifiziert und deren Position und Orientierung innerhalb des aufgenommenen Bild ermittelt werden,
**dadurch gekennzeichnet, dass** als kontrastreiche Bildmarke ein von einer Kreislinie einbeschriebenes Kreisflächenmuster gewählt wird, dessen Kreisfläche in vier jeweils zum Kreismittelpunkt punktsymmetrisch ausgebildete Quadrantenflächen unterteilt ist, von denen jeweils zwei sich dem Kreismittelpunkt gegenüberliegende Quadranten im optischen Erscheinungsbild identisch sind und sich jeweils zwei in Kreisumfangsrichtung benachbart angeordnete Quadranten kontrastreich voneinander abheben, sowie mit einem die Kreislinie peripher umgebenden Ringbereich, der in wenigstens zwei, vorzugsweise sechs die Bildmarke individualisierende Ringsektoren unterteilt ist, von denen sich jeweils zwei in Kreisumfangsrichtung benachbart angeordnete Ringsektoren kontrastreich voneinander abheben und einen die Bildmarke individualisierenden Code repräsentieren,
dass die Detektion der Bildmarke durch Auffinden des Kreismittelpunktes, dem so genannten Zentralpunkt, der Bildmarke erfolgt, in dem die vier Quadrantenflächen zusammentreffen und dass die Detektion des Zentralpunktes im Rahmen einer auf Bildpixelebene erfolgenden Ringabtastung durchgeführt wird.

2. Verfahren nach Anspruch 1,
**dadurch gekennzeichnet, dass** bei der Ringabtastung eine Lauflängencodierung angewendet wird, bei der ein Entscheidungskriterium für die Detektion eines Zentralpunktes einer Bildmarke zugrundegelegt wird.

3. Verfahren nach Anspruch 2,
**dadurch gekennzeichnet, dass** bei einem detektierten Zentralpunkt eine Ballungsanalyse derart durchgeführt wird, dass ein Schwerpunkt einer Detektionsballung ermittelt wird, durch den mit hoher Genauigkeit der Zentralpunkt einer Bildmarke als solcher identifiziert und räumlich im aufgenommenen Bild bestimmt wird.

4. Verfahren nach Anspruch 3,
**dadurch gekennzeichnet, dass** im Rahmen eines Optimierungsprozesses der ermittelte Schwerpunkt der Detektionsballung subpixelgenau derart im Rahmen eines dem aufgenommenen Bild zuordenbaren Koordinatensystem gesucht wird, indem ein Punkt mit einer in seiner Umgebung ausgeprägtesten Punktsymmetrie gesucht wird.

5. Verfahren nach Anspruch 4,
**dadurch gekennzeichnet, dass** im Rahmen des Optimierungsprozesses wenigstens eine Ringabtastung durchgeführt wird, bei der Abtastsignale gewonnen werden, die einer Autokorrelation unterzogen werden.

6. Verfahren nach Anspruch 5,
**dadurch gekennzeichnet, dass** Punkte ausgewählt werden, deren Autokorrelationswerte bei 180° näherungsweise den Wert 1 besitzen sowie innerhalb eines durch die durchgeführt Ringabtastung vorgebbaren Erwartungsintervalls liegen.

7. Verfahren nach einem der Ansprüche1 bis 6,
**dadurch gekennzeichnet, dass** die detektierte Bildmarke einer affinen Transformation unterzogen wird, bei der Abbildungsparameter zur Beschreibung einer gescherten und/oder gedrehten Abbildung der Bildmarke ermittelt werden.

8. Verfahren nach Anspruch 7,
**dadurch gekennzeichnet, dass** die Abbildungsparameter mittels wenigstens einer Ringabtastung um den Zentralpunkt ermittelt werden, bei der daraus erhaltene Werte einer Autokorrelationsfunktion unterzogen werden, die Symmetriewerte liefert, die einer weiteren Bewertung unter Zugrundelegung von Symmetriebedingungen unterzogen werden.

9. Verfahren nach Anspruch 7 oder 8,
**dadurch gekennzeichnet, dass** unter Berücksichtigung der die affine Transformation beschreibenden Abbildungsparameter der die Bildmarke individualisierende Code mittels Ringabtastung gelesen wird, und
dass der gelesene Code einer Gültigkeitsprüfung unterzogen wird.

10. Verfahren nach Anspruch 9,
**dadurch gekennzeichnet, dass** auf Grundlage des als gültig verifizierten Codes eine dem Code zuordenbare Drehlage ermittelt wird, und
dass die Drehlage zur Bestimmung einer eineindeutigen die Bildmarkenabbildung beschreibenden affinen Transformation verwendet wird.

11. Verfahren nach Anspruch 9 oder 10,
**dadurch gekennzeichnet, dass** die räumliche Position und Orientierung der Bildmarke innerhalb des aufgenommenen Bildes nach Vorlage aller Informationen, die für eine eindeutige Detektion der Bildmarke, und in Kenntnis tatsächlicher Geometriedaten der reellen Bildmarke unter Anwendung eines Rückwärtsschnittverfahrens ermittelt werden.

12. Verfahren nach Anspruch 11,
**dadurch gekennzeichnet, dass** neben der Affintransformation der detektierten Bildmarke reale subpixelgenau bestimmte Bildmesspunkte von ausgezeichneten Bildpunkten hinzugezogen werden und dadurch die bei reiner Affintransformation gegebene Doppeldeutigkeit der Orientierung der Bildmarke im Raum aufgehoben wird.

13. Verfahren nach einem der Ansprüche 1 bis 12,
**dadurch gekennzeichnet, dass** das aufgenommene Bild von der Szene auf Bildpixelebene einer Hochpass-Filterung unterzogen wird, zum Erhalt eines differenzierten Bildes, das der Detektion der Bildmarke, insbesondere zur Detektion deren Kreismittelpunkts, des Zentralpunkts, zugrunde gelegt wird.

## Claims

1. A method for image-mark-supported image analysis, in which at least one image of a scene, in which at least one high-contrast image mark is visibly introduced, is recorded by means of an image recording unit, and the recorded image is subjected to an image analysis, in which at least one image mark is detected and identified and the position and orientation thereof within the recorded image is determined,
**characterised in that** a circular-area pattern inscribed by a circular line is chosen as high-contrast image mark, the circular area of which is divided into four quadrant areas formed point-symmetrically to the circle midpoint in each case, of which two in each case are identical to the quadrants opposite the circle midpoint in terms of optical appearance and in each case two quadrants arranged adjacently to one another in the circle circumferential direction stand out from one another in a high-contrast manner, and also with an annular region peripherally surrounding the circular line, which annular region is divided into at least two, preferably six annular sectors which individualise the image mark and of which two annular sectors arranged adjacently in the circle circumferential direction stand out from one another in each case in a high-contrast manner and represent a code which individualises the image mark,
**in that** the detection of the image mark takes place by means of the discovery of the circle midpoint, the so-called centre point, of the image at which the four quadrant areas intersect and **in that** the detection of the centre point is carried out in the context of an annular scanning.

2. The method according to Claim 1,
**characterised in that** a run-length encoding is applied in the annular scanning, in which a decision criterion is used as a basis for the detection of a centre point of an image mark.

3. The method according to Claim 2,
**characterised in that** a concentration analysis is carried out in such a manner for a detected centre point that a focus of a detection concentration is determined, by means of which the centre point of an image mark can be identified as such with high precision and spatially detected in the recorded image.

4. The method according to Claim 3,
**characterised in that**, in the context of an optimisation process, the determined focus of the detection concentration is sought with sub-pixel precision in such a manner in the context of a coordinate system which can be assigned to the recorded image by seeking a point with most pronounced point symmetry in its surroundings.

5. The method according to Claim 4,
**characterised in that** at least one annular scanning is carried out in the context of the optimisation process, in which scanning signals are obtained which are subjected to an autocorrelation.

6. The method according to Claim 5,
**characterised in that** points are selected the autocorrelation values of which approximately have the value 1 at 180° and also lie within an expectation interval which can be predetermined by the annular scanning carried out.

7. The method according to one of Claims 1 to 6,
**characterised in that** the detected image mark is subjected to an affine transformation in which imaging parameters for describing a sheared and/or rotated imaging of the image mark are determined.

8. The method according to Claim 7,
**characterised in that** the imaging parameters are determined by means of at least one annular scanning around the centre point, in which the values obtained therefrom are subjected to an autocorrelation function, which delivers symmetry values which are subjected to a further analysis on the basis of symmetry conditions.

9. The method according to Claim 7 or 8,
**characterised in that** the code individualising the image mark is read by means of annular scanning taking account of the imaging parameters describing the affine transformation, and
**in that** the read code is subjected to a validation.

10. The method according to Claim 9,
**characterised in that** a rotational position which can be assigned to the code is determined on the basis of the verified code, and
**in that** the rotational position is used for determining an affine transformation describing the image mark imaging.

11. The method according to Claim 9 or 10,
**characterised in that** the spatial position and orientation of the image mark within the taken image are determined in accordance with the model of all information which is determined for a clear detection of the image mark and in the knowledge of all actual geometric data of the real image using a resection method.

12. The method according to Claim 11,
**characterised in that** in addition to the affine transformation of the detected image mark, real sub-pixel-precisely determined image measurement points of marked pixels are drawn upon and as a result, the ambiguity of the orientation of the image mark in space resulting in the case of pure affine transformation is overridden.

13. The method according to one of Claims 1 to 12,
**characterised in that** the recorded image of the scene is subjected to high-pass filtering at image pixel level, to obtain a differentiated image which is used as a basis for the detection of the image mark, particularly for the detection of the circle midpoint, the centre point.

## Revendications

1. Procédé pour l'évaluation d'une image à l'aide de repères d'image, avec lequel au moins une image d'une scène, dans laquelle au moins un repère d'image à fort contraste est intégré de manière visible, est enregistrée grâce à une unité d'enregistrement d'images, et l'image enregistrée étant soumise à une évaluation d'image lors de laquelle au moins un repère d'image est détecté et identifié et la position et l'orientation de celui-ci au sein de l'image enregistrée étant déterminées,
**caractérisé en ce que** l'on choisit en tant que repère d'image à fort contraste un modèle à surface circulaire inscrit dans un cercle, dont la surface circulaire est subdivisée en quatre quadrants respectivement réalisés à symétrie ponctuelle par rapport au centre du cercle, deux des quadrants respectifs, mutuellement opposés par rapport au centre du cercle, étant identiques quant à leur apparence optique, et deux quadrants respectifs disposés de manière adjacente en direction circonférentielle du cercle étant fortement contrastés l'un par rapport à l'autre, ainsi qu'avec une région annulaire entourant périphériquement la circonférence du cercle, laquelle est subdivisée en au moins deux, et de préférence six secteurs d'anneau individualisant le repère d'image, parmi lesquels deux secteurs d'anneau respectifs disposés de manière adjacente dans la direction circonférentielle du cercle sont fortement contrastés l'un par rapport à l'autre et représentent un code individualisant le repère d'image,
la détection du repère d'image s'effectuant en trouvant le centre du cercle, le dénommé point central du repère d'image, dans lequel les quatre quadrants se rencontrent et la détection du point central étant réalisée dans le cadre d'un balayage d'anneau s'effectuant sur le plan de pixel d'image.

2. Procédé selon la revendication 1,
**caractérisé en ce que** lors du balayage d'anneau, on utilise un codage de la longueur de parcours pour lequel on se base sur un critère de décision pour la détection d'un point central d'un repère d'image.

3. Procédé selon la revendication 2,
**caractérisé en ce qu'**avec un point central détecté, une analyse de concentration est réalisée de manière à déterminer un barycentre d'une concentration de détection, grâce auquel on identifie avec une grande précision le point central d'un repère d'image en tant que tel et le détermine de manière spatiale dans l'image enregistrée.

4. Procédé selon la revendication 3,
**caractérisé en ce que** dans le cadre d'un processus d'optimisation, le barycentre déterminé de la concentration de détection est recherché avec une précision de l'ordre des sous-pixels dans le cadre d'un système de coordonnées pouvant être associé à l'image enregistrée **en ce qu'**un point est recherché avec une symétrie ponctuelle la plus marquée dans son entourage.

5. Procédé selon la revendication 4,
**caractérisé en ce que** dans le cadre du processus d'optimisation, on réalise au moins un balayage d'anneau lors duquel on obtient des signaux de balayage, lesquels sont soumis à une autocorrélation.

6. Procédé selon la revendication 5,
**caractérisé en ce que** l'on choisit des points dont les valeurs d'autocorrélation à 180° présentent approximativement la valeur 1 et qui se situent à l'intérieur d'un intervalle de consigne pouvant être prédéterminé grâce au balayage d'anneau effectué.

7. Procédé selon l'une des revendications 1 à 6,
**caractérisé en ce que** le repère d'image détecté est soumis à une transformation affine, avec laquelle le paramètre de représentation est déterminé pour la description d'une représentation cisaillée et/ou tournée du repère d'image.

8. Procédé selon la revendication 7,
**caractérisé en ce que** les paramètres de représentation sont déterminés à l'aide d'au moins un balayage d'anneau autour du point central lors duquel les valeurs obtenues grâce à celui-ci sont soumises à une autocorrélation qui délivre des valeurs de symétrie, lesquelles sont soumises à une autre évaluation en se basant sur des conditions de symétrie.

9. Procédé selon la revendication 7 ou 8,
**caractérisé en ce qu'**en tenant compte des paramètres de représentation décrivant la transformation affine, on lit le code individualisant le repère d'image à l' aide d'un balayage d'anneau, et
**en ce que** le code lu est soumis à un contrôle de validité.

10. Procédé selon la revendication 9,
**caractérisé en ce que** sur la base du code vérifié quant à sa validité, on détermine une position de rotation pouvant être associée au code, et
**en ce que** l'on utilise la position de rotation pour la détermination d'une transformation affine univoque décrivant la représentation du repère d'image.

11. Procédé selon la revendication 9 ou 10,
**caractérisé en ce que** l'on détermine la position et l'orientation dans l'espace du repère d'image à l'intérieur de l'image enregistrée sur présentation de toutes les informations déterminées pour une détection univoque du repère d'image, et en connaissance de données géométriques réelles du repère d'image réel en utilisant un procédé de coupe inverse.

12. Procédé selon la revendication 11,
**caractérisé en ce qu'**en plus de la transformation affine du repère d'image détecté, on tient compte de points de mesure d'image réels déterminés avec une précision de l'ordre des sous-pixels d'excellents points d'image, en annulant de la sorte l'ambiguïté en cas de pure transformation affine de l'orientation du repère d'image dans l'espace.

13. Procédé selon l'une des revendications 1 à 12,
**caractérisé en ce que** l'image enregistrée de la scène sur un plan de pixel d'image est soumise à un filtrage passe-haut, afin d'obtenir une image différenciée, laquelle est prise comme base pour la détection du repère d'image, en particulier pour la détection du centre du cercle de celui-ci, du point central.
